**Europäisches Patentamt**

(19) **European Patent Office**

**Office européen des brevets**

(11) Publication number : **0 412 063 B1**

(12) **EUROPEAN PATENT SPECIFICATION**

(45) Date of publication of patent specification :
23.09.92 Bulletin 92/39

(51) Int. Cl.⁵ : **B60H 1/24**

(21) Application number : **90830354.8**

(22) Date of filing : **31.07.90**

(54) **A concealable air vent.**

(30) Priority : **04.08.89 IT 6768389**

(43) Date of publication of application :
**06.02.91 Bulletin 91/06**

(45) Publication of the grant of the patent :
**23.09.92 Bulletin 92/39**

(84) Designated Contracting States :
**DE ES FR GB SE**

(56) References cited :
**DE-C- 473 951**
**DE-U- 6 935 036**

(73) Proprietor : **FIAT AUTO S.p.A.**
**Corso Giovanni Agnelli 200**
**I-10135 Torino (IT)**

(72) Inventor : **Tarzia, Antonio**
**Corso Torino, 79**
**I-10064 Pinerolo (Torino) (IT)**
Inventor : **Aragno, Franco**
**Via Magenta 8**
**I-20093 Collegno (Torino) (IT)**

(74) Representative : **Notaro, Giancarlo et al**
**c/o Jacobacci-Casetta & Perani S.p.A. Via**
**Alfieri, 17**
**I-10121 Torino (IT)**

# Description

The present invention relates to an air vent, particularly for a motor vehicle dashboard.

Air vents are known which have vanes that deflect the outflowing air and rotate to mask the discontinuity created by the presence of the vent in the dashboard of the motor vehicle when the vent is inactive.

This solution is not completely satisfactory, since the deflector vanes are difficult to integrate concordantly with the line of the dashboard.

The object of the present invention is to provide a vent which has a device for concealing it when it is not in its operative position, so that it blends well with the line and design of the dashboard.

This object is achieved by a vent including means for moving the body of the vent substantially transverse the dashboard between an operative position in which the body of the vent projects through a hole formed in the dashboard and a rest position in which the body of the vent is retracted behind the dashboard, and at least one element for covering the hole in the dashboard and having means for moving it between an inactive position which it assumes when the body of the vent projects through the hole and an active, covering position which it assumes when the body of the vent is behind the dashboard.

In comparison with conventional vents, the vent according to the invention has the advantage that the outflowing air can be deflected better both vertically and horizontally.

Further characteristics and advantages of the present invention will become clear from the description which follows with reference to the appended drawings, provided by way of non-limiting example, in which:

Figure 1 is a side elevational view of a vent according to the invention,

Figure 2 is a plan view of the vent of Figure 1,

Figure 3 is a side elevational view of another embodiment of a vent according to the invention, and

Figure 4 is a plan view of the vent of Figure 3.

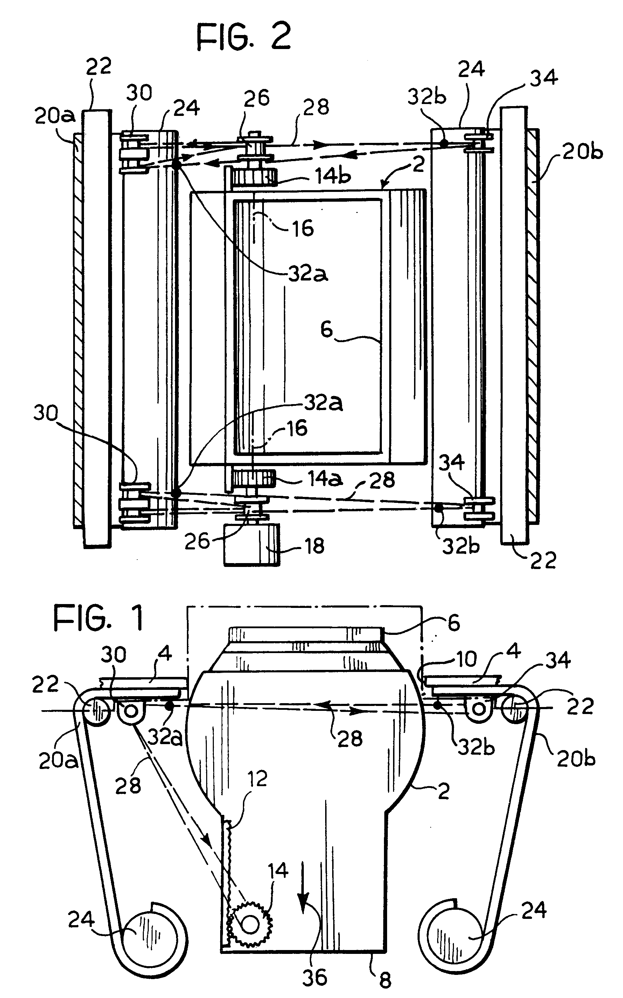

With reference to Figures 1 and 2, an air vent for a motor vehicle dashboard 4 includes a hollow body 2 adapted to allow the flow of air and having an outlet end 6 and an inlet end 8. The latter is connected by a flexible pipe, not shown, to the fixed air-supply ducts of the motor vehicle. The dashboard 4 has a hole 10 through which the body 2 can pass.

Two racks 12 are arranged symmetrically on the body 2 of the vent and gears 14 having the same axis 16 are engaged therewith, one gear 14a being driven by an electric motor 18 and the other 14b being idle.

First and second flexible elements 20a and 20b, each of which is adapted to cover one half of the hole 10, have portions parallel to the dashboard 4 and portions substantially transverse the dashboard. The covering elements 20a and 20b assume this configuration by virtue of the presence of tensioning rollers 22. The free end of the transverse portion of each element 20 is wound round a resiliently self-winding roller 24.

A reel 26 is keyed to the shaft of each gear 14 and respective cables 28 are wound thereon. Each cable 28 also passes over a first return roller 30 facing the covering element 20a, is fixed at the point 32b to the covering element 20b, passes over a second return roller 34 facing the covering element 20b, is fixed at the point 32a to the other covering element 20a, passes over the first return roller 30 again, and returns from there to the reel 26.

Figures 1 and 2 show the body 2 of the vent in the operative configuration in which it projects through the hole 10 with the covering elements 20a, 20b retracted. In order to change from this configuration to that in which the body 2 is retracted behind the dashboard 4 and the elements 20a, 20b cover the hole 10, it is necessary to activate the motor 18. The two gears 14a, 14b rotate on the racks 12, thus causing the body 2 to move in the direction indicated by the arrow 36. The reels 26 simultaneously move the respective cables 28 which, being fixed to the elements 20 at the points 32, cause the portions of the elements 20 parallel to the dashboard 4 to move until the hole 10 is covered. The body of the vent 2 is thus concealed since the elements 20a and 20b completely close the hole 10 and fit well with the line of the dashboard 4.

Clearly, the rotation of the motor 18 in the opposite sense causes the body 2 and the covering elements 20a and 20b to return to the positions shown in Figures 1 and 2.

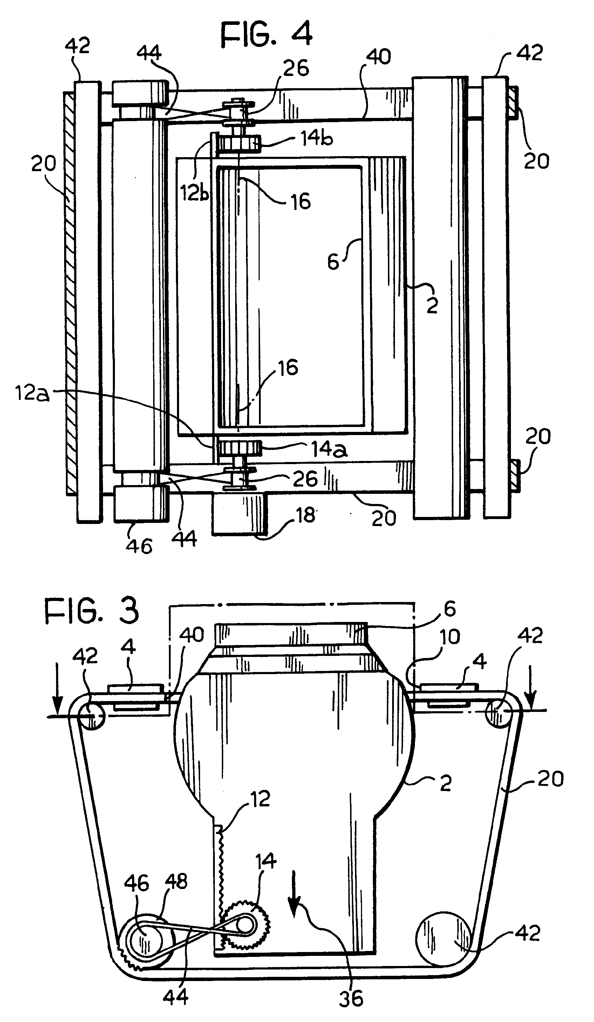

Figures 3 and 4 show an alternative embodiment of a vent according to the invention, in which the same reference numerals identify elements analogous to those described above.

A continuous band 20 with a longitudinal aperture 40 is kept in position by tensioning rollers 42 and acts as the covering element for the hole 10 in the dashboard 4. Respective reels 26 keyed to the shafts of the two gears 14a and 14b are connected by means of belts 44 to a transmission shaft 46 to which knurled wheels 48 engaging the inner surface of the band 20 are keyed.

Figures 3 and 4 show the body 2 of the vent in the operative configuration with the band 20 in the position in which it does not cover the hole 10. In order to change to the configuration in which the body 2 is retracted behind the dashboard 4 and the band 20 covers the hole 10, it is necessary to activate the motor 18. The movement of the body 2 is the same as that described above. Simultaneously with this movement, the reels 26 rotate the knurled wheels 48 which make the band 20 pass around the tensioning rollers 42. The longitudinal aperture 40 in the band 20 is thus no longer in correspondence with the hole 10 and the latter is concealed by the portion of the band 20 with a continuous cross-section.

## Claims

1. An air vent, particularly for a motor vehicle dashboard (4), characterised in that it includes means for moving the body (2) of the vent substantially transverse the dashboard (4) between an operative position in which the body (2) of the vent projects through a hole (10) formed in the dashboard (4) and a rest position in which the body (2) of the vent is retracted behind the dashboard (4), and at least one element (20) for covering the hole (10) in the dashboard (4) and having means for moving it between an inactive, retracted position which it assumes when the body (2) of the vent projects through the hole (10) and an active, covering position which it assumes when the body (2) of the vent is behind the dashboard (4).

2. A vent according to Claim 1, characterised in that the means for moving the body (2) comprise at least one first gear (14a) which is driven by an electric motor (18) and engages a first rack (12a) fixed to the body (2) of the vent.

3. A vent according to Claim 2, characterised in that the means for moving the body (2) include a second gear (14b) which is situated on the extension of the axis (16) of the first gear (14a), symmetrically relative to the body (2), and engages a second rack (12b) carried by the body (2).

4. A vent according to Claim 3, characterised in that it includes a single covering element formed by a continuous band (20) arranged around return rollers (42) and having a longitudinal aperture (40) so that the body (2) of the vent can pass through it when the aperture (40) is in correspondence with the hole (10) in the dashboard (4).

5. A vent according to Claim 4, characterised in that the means for moving the band (20) comprise two reels (26) keyed to the shafts of the first and second gears (14a, 14b) respectively and connected by belts (44) to a transmission shaft (46) to which knurled wheels (48) engageable with the surface of the band (20) to move the latter are keyed.

6. A vent according to Claim 3, characterised in that it includes first and second covering elements (20a, 20b) which are movable relative to the dashboard (4) and are each adapted to cover a half of the hole (10) in the dashboard (4).

7. A vent according to Claim 6, characterised in that the means for moving each covering element (20) comprise a reel (26) which is keyed to the shaft of the respective gear (14a, 14b) and over which respective cables (28) are wound, each cable (28) subsequently passing over a first return roller (30) which faces the first covering element (20a), being fixed at a point (32b) to the second covering element (20b), passing over a second return roller (34) which faces the second covering element (20b), being fixed at a point (32a) to the first covering element (20a), and passing over the first return roller (30) again.

## Patentansprüche

1. Entlüftungsdüse für ein Kraftfahrzeug-Instrumentenbrett (4), dadurch **gekennzeichnet**, daß sie Mittel aufweist, um den Düsenkörper (2) im wesentlichen quer zum Instrumentenbrett (4) zwischen einer Betriebsstellung, bei der der Düsenkörper (2) durch eine im Instrumentenbrett (4) ausgebildete Öffnung (10) herausragt, und einer Ruhestellung, bei der der Düsenkörper (2) hinter das Instrumentenbrett (4) zurückgezogen ist, zu verstellen, sowie wenigstens ein Element (20) zum Abdekken der Öffnung (10) im Instrumentenbrett (4), welches Mittel zum Verstellen desselben zwischen einer inaktiven, zurückgezogenen Position aufweist, die dieses einnimmt, wenn der Düsenkörper (2) durch die Öffnung (10) herausragt, sowie einer aktiven Abdeckposition, welche dieses einnimmt, wenn der Düsenkörper (2) sich hinter dem Instrumentenbrett (4) befindet.

2. Lüftungsdüse nach Anspruch 1, dadurch **gekennzeichnet**, daß die Mittel zum Verstellen des Düsenkörpers (2) zumindest ein erstes Zahnrad (14a) umfassen, welches durch einen elektrischen Motor (18) angetrieben wird und in eine erste Zahnstange (12a) eingreift, die mit dem Düsenkörper (2) verbunden ist.

3. Lüftungsdüse nach Anspruch 2, dadurch **gekennzeichnet**, daß die Mittel zum Verstellen des Düsenkörpers (2) ein zweites Zahnrad (14b) umfassen, welches in Verlängerung der Achse (16) des ersten Zahnrades (14a) relativ zum Düsenkörper (2) symmetrisch angeordnet ist und in eine zweite, am Düsenkörper (2) angeordnete Zahnstange (12b) eingreift.

4. Lüftungsdüse nach Anspruch 3, dadurch **gekennzeichnet**, daß sie ein einzelnes, durch ein kontinuierliches Band (20) gebildetes Abdeckelement umfaßt, welches über Umlenkrollen (42) geführt ist und eine längs ausgerichtete Öffnung (40) hat, durch die der Düsenkörper (2) hindurchtreten kann, wenn die Öffnung (40) sich in Flucht mit der Öffnung (10) des Instrumentenbrettes (4) befindet.

5. Lüftungsdüse nach Anspruch 4, dadurch **gekennzeichnet**, daß die Mittel zum Verstellen des Bandes (20) zwei Spulen (26) umfassen, die jeweils auf eine Welle des ersten bzw. zweiten Zahnrades (14a, 14b) aufgekeilt sind und über Riemen (44) mit einer Übertragungswelle (46) verbunden sind, auf welche geriffelte Räder (48) aufgekeilt sind, die an der Oberfläche des Bandes (20) zum Verstellen des letzteren anliegen.

6. Lüftungsdüse nach Anspruch 3, dadurch **gekennzeichnet**, daß sie ein erstes Abdeckelement (20a) und ein zweites Abdeckelement (20b) umfaßt, die relativ zum Instrumentenbrett (4) verstellbar und jeweils dazu ausgelegt sind, eine Hälfte der Öffnung (10) im Instrumentenbrett (4) abzudecken.

7. Lüftungsdüse nach Anspruch 6, dadurch **gekennzeichnet**, daß die Mittel zum Verstellen der jeweiligen Abdeckelemente (20) jeweils eine auf die Welle eines Zahnrades (14a, 14b) aufgekeilte Spule (26) umfassen, über die zugeordnete Seile (28) gewickelt sind, wobei jedes dieser Seile (28) über eine erste Umlenkrolle (30) geführt ist, die dem ersten Abdeckelement (20a) gegenüberliegt, sodann in einem Punkt (32b) mit dem zweiten Abdeckelement (20b) verbunden ist, sodann über eine zweite Umlenkrolle (34) geführt ist, die dem zweiten Abdeckelement (20b) gegenüberliegt, sodann in einem Punkt (32a) mit dem ersten Abdeckelement (20a) verbunden ist und schließlich wieder über die erste Umlenkrolle (30) geführt ist.

**Revendications**

I. Buse d'air, notamment pour un tableau de bord (4) de véhicule automobile, caractérisée en ce qu'elle comprend des moyens servant à déplacer le corps (2) de la buse sensiblement transversalement au tableau de bord (4) entre une position active dans laquelle le corps (2) de la buse fait saillie à travers un trou (l0) formé dans le tableau de bord (4) et une position de repos dans laquelle le corps (2) de la buse est rétracté derrière le tableau de bord (4) et au moins un élément (20) servant à recouvrir le trou (l0) du tableau de bord (4) et qui possède des moyens permettant de le déplacer entre une position inactive, rétractée, qu'il prend lorsque le corps (2) de la buse fait saillie à travers le trou (l0) et une position active, de recouvrement, qu'il prend lorsque le corps (2) de la buse se trouve derrière le tableau de bord (4).

2. Buse selon la revendication I, caractérisée en ce que les moyens servant à déplacer le corps (2) comprennent au moins un premier pignon (l4a) qui est entraîné par un moteur électrique (l8) et qui attaque une première crémaillère (l2a) fixée au corps (2) de la buse.

3. Buse selon la revendication 2, caractérisée en ce que les moyens servant à déplacer le corps (2) comprennent un second pignon (l4b) qui est situé sur le prolongement de l'axe (l6) du premier pignon (l4a), symétriquement par rapport au corps (2), et qui est en prise avec une seconde crémaillère (l2b) portée par le corps (2).

4. Buse selon la revendication 3, caractérisée en ce qu'elle comprend un élément de recouvrement unique formé d'une bande continue (20) qui embrasse des rouleaux de renvoi (42) et possède une ouverture longitudinale (40), de sorte que le corps (2) peut passer à travers elle lorsque l'ouverture (40) est en coïncidence avec le trou (l0) du tableau de bord (4).

5. Buse selon la revendication 4, caractérisée en ce que les moyens servant à déplacer la bande (20) comprennent deux rouleaux (26) clavetés sur les arbres des premier et second pignons (l4a, l4b) respectivement, et reliés par des courroies (44) à un arbre de transmission (46) auquel sont clavetées des roues moletées (48) qui peuvent être mises en prise avec la surface de la bande (20) pour entraîner cette dernière.

6. Buse selon la revendication 3, caractérisée en ce qu'elle comprend des premier et second éléments de recouvrement (20a, 20b) qui peuvent se déplacer par rapport au tableau de bord (4) et qui sont adaptés pour recouvrir chacun la moitié du trou (l0) du tableau de bord (4).

7. Buse selon la revendication 6, caractérisée en ce que les moyens servant à déplacer chaque élément de recouvrement (20) comprennent une poulie (26) qui est clavetée sur l'arbre du pignon respectif (l4a, l4b) et sur laquelle est enroulé un câble respectif (28), chaque câble (28) passant ensuite sur un premier rouleau de renvoi (30) placé face au premier élément de recouvrement (20a), étant fixé au second élément de recouvrement (20b) en un point (32b), passant sur un second rouleau de renvoi (34) placé face au second élément de recouvrement (20b), étant fixé au premier élément de recouvrement (20a) en un point (32a) puis passant de nouveau sur le premier rouleau de renvoi (30).

FIG. 2

FIG. 1

## FIG. 4

## FIG. 3